# FASCICULE DE BREVET EUROPEEN

(11) **EP 1 733 451 B1**
(45) Date de publication et mention de la délivrance du brevet: **08.08.2007**
(21) Numéro de dépôt: 05751604.9
(22) Date de dépôt: 04.04.2005
(51) Int. Cl.: H01M 10/54, H01M 6/52

(54) **PROCEDE DE RECYCLAGE DE MELANGE DE PILES ET BATTERIES A ANODE A BASE DE LITHIUM**
VERFAHREN ZUR RÜCKFÜHRUNG VON GEMISCHTEN BATTERIEN UND ZELLEN MIT LITHIUMBASIERENDEN ANODEN
METHOD FOR THE RECYCLING OF MIXED BATTERIES AND CELLS COMPRISING LITHIUM-BASED ANODES

(30) Priorité: 06.04.2004 FR 0403597
(43) Date de publication de la demande: 20.12.2006
(73) Titulaire: Recupyl S.A., 38420 Domène (FR)
(72) Inventeur: TEDJAR, Farouk, F-38100 Grenoble (FR); FOUDRAZ, Jean-Claude, F-38600 Fontaine (FR)
(74) Mandataire: Hecké, Gérard
(86) Numéro de dépôt international: PCT/FR2005/000814
(87) Numéro de publication internationale: WO 2005/101564

(56) Documents cités:
- EP-A- 1 333 522
- DATABASE WPI Section Ch, Week 200338 Derwent Publications Ltd., London, GB; Class L03, AN 2003-401034 XP002306993 & TW 501 294 A (IND TECHNOLOGY RES INST) 1 septembre 2002 (2002-09-01)
- PATENT ABSTRACTS OF JAPAN vol. 1999, no. 14, 22 décembre 1999 (1999-12-22) & JP 11 242967 A (NIPPON MINING & METALS CO LTD), 7 septembre 1999 (1999-09-07)
- PATENT ABSTRACTS OF JAPAN vol. 1996, no. 01, 31 janvier 1996 (1996-01-31) & JP 07 245126 A (SUMITOMO METAL MINING CO LTD), 19 septembre 1995 (1995-09-19)
- PATENT ABSTRACTS OF JAPAN vol. 2000, no. 14, 5 mars 2001 (2001-03-05) & JP 2000 313926 A (NIPPON MINING & METALS CO LTD), 14 novembre 2000 (2000-11-14)
- PATENT ABSTRACTS OF JAPAN vol. 1995, no. 02, 31 mars 1995 (1995-03-31) & JP 06 322452 A (SUMITOMO METAL MINING CO LTD), 22 novembre 1994 (1994-11-22)

## Description

### Domaine technique de l'invention

L'invention concerne un procédé de traitement hydrométallurgique des piles et des batteries comprenant au moins une anode à base de lithium, un sel dissous dans un électrolyte et une cathode comprenant au moins un métal ou une combinaison de métaux choisis parmi le cobalt, le nickel, le manganèse et le fer, en vue de récupérer les fractions valorisables.

### État de la technique

L'accroissement des produits électroniques portables a conduit à rendre le marché des piles en expansion (30 milliards de dollars en 1998) avec une croissance annuelle de 6 % et les besoins en autonomie au moyen de sources ayant une bonne densité d'énergie ont dopé le marché des batteries portables qui présente une croissance encore plus importante (12 %). En particulier, les systèmes au lithium ont connu ces dernières années une avancée remarquable (plus de 45 % d'augmentation en 3 ans).

Actuellement, les batteries dites lithium ion ainsi que les batteries à électrolyte polymère sont l'innovation technologique majeure des cinquante dernières années dans le domaine des générateurs électrochimiques. Par contre, au-delà des nombreux avantages liés aux performances, les systèmes au lithium restent une source importante de produits ayant un impact environnemental reconnu. Les effets sont liés principalement aux composants suivants :
➢ des métaux lourds comme matériaux cathodiques,
➢ des sels conducteurs à base de fluor, d'arsenic ou de composés sulfonés,
➢ des solvants organiques et
➢ un métal alcalin très réactif.

Beaucoup de ces éléments ne sont pas dégradables et présentent souvent un degré de toxicité important, soit directement sur la santé des hommes et des animaux, soit indirectement en polluant le sol, les eaux, les plantes et la chaîne alimentaire. Même disséminés dans les déchets, ils contribuent à polluer des matrices plus importantes ou à accentuer des situations déjà problématiques dans le cas de l'incinération avec des ordures ménagères. En outre, la dispersion des métaux dans les déchets est en contradiction avec la préservation des ressources naturelles. De plus, certains des métaux utilisés dans les systèmes au lithium sont difficiles et coûteux à extraire.

L'état de l'art montre un grand nombre de tentatives de propositions de traitement des systèmes au lithium. Ainsi, le brevet US6511639 décrit un procédé de récupération des électrodes négatives au moyen d'un traitement thermique et concerne uniquement les batteries lithium ion. Dans le document WO-A-0223651, le traitement associe une étape cryogénique suivie d'une étape d'incinération et concerne uniquement les batteries lithium polymère à base d'oxyde de vanadium.

Le procédé décrit dans la demande de brevet FR-A-2812973 propose un broyage humide des batteries lithium ion et des batteries Nickel métal hydrure tandis que le procédé décrit dans le document JP-A-11185833 propose une solution basée sur un traitement thermique et concerne uniquement les batteries lithium ion. Le procédé selon la demande WO-A-9934473 propose une extraction à l'acétonitrile et concerne uniquement les batteries lithium ion.

Le procédé selon le brevet US5882811 propose une découpe au jet d'eau suivie d'une électrolyse en milieu fondu de LiCl et d'une distillation de l'électrolyte. Il concerne uniquement les batteries lithium ion ainsi que le procédé selon la demande JP-A-10330855 qui propose un traitement thermique direct dans un four rotatif.

Le procédé selon la demande de brevet JP 0287864 propose une extraction par solvant et concerne uniquement les batteries lithium ion. Les procédés selon les demandes de brevet JP 10046266, JP 10158751 et JP-A-10074539 proposent un traitement thermique compris entre 350°C et 1000°C et concernent uniquement les batteries lithium ion.

Par contre, les seuls procédés exploités industriellement dans le monde sont au nombre de deux :
1 - Le procédé dit TOXCO proposé dans le brevet US5888463 et présenté par W J. Mc Laughlin Lithium battery recycling Proceedings of the 5th international Seminar on Battery waste Management (Floride 1993). Il est appliqué aux Etats-Unis pour le recyclage des piles et accumulateurs au lithium en mélange (LiSO₂, LiSOCl₂, LiMnO₂, LiFeS₂, Li-ion et LiCF_{×}). Les piles et les accumulateurs sont congelés dans l'azote liquide à -196° C avant d'être broyés. Les broyats sont récupérés dans une solution basique en vue de neutraliser les composés acides émis (H₂, SO₂, SOC₁₂...) et de hydrolyser les solvants organiques. Les sels de lithium formés (Li₂SO₄, LICl) sont séparés des fragments métalliques et plastiques résiduels par une opération de dégrillage. L'ajout de carbonate de sodium aux solutions permet de précipiter le lithium sous forme de carbonate, avant purification et recristallisation d'un sel de qualité technique. Aucune indication n'est donnée sur la récupération des métaux cathodiques.
2 - Le procédé SONY-SUMITOMO présenté durant le 5^{ème} séminaire international sur la gestion des piles et des batteries usagées (Floride USA, Octobre 1998). Il est appliqué au Japon uniquement sur les accumulateurs Li-ion. Le procédé est basé sur une calcination à une température de l'ordre de 1000°C dans un four. Après calcination, les résidus sont broyés et tamisés. La poudre tamisée contient les oxydes de cobalt et d'autres oxydes. Aucune indication de valorisation du lithium n'est donnée.

D'une manière générale, l'état de l'art permet ainsi de constater que :
- Les procédés thermiques posent de gros problèmes d'émissions de gaz notamment de gaz à effets de serre et sont en contradiction avec les engagements des Etats signataires des accords internationaux récents.
- Les procédés de broyage en voie humide posent de gros problèmes de sécurité liés à l'hydrogène émis lors du broyage des batteries. Ce problème se retrouve également lors de tout procédé proposant un mélange de batteries au lithium et de système aqueux.
- L'utilisation d'acétonitrile pose de gros problèmes de sécurité notamment pour le personnel d'exploitation et pour les émissions dans le milieu naturel.

Et finalement, force est de constater deux handicaps majeurs parmi tous les procédés proposés :
1- Parmi 11 procédés proposés, un seul procédé est destiné à traiter tous types de piles au lithium,
2- Deux procédés sur les 11 sont exploités industriellement à ce jour.

Enfin, dans les procédés non thermiques, aucune solution précise et sûre n'est proposée pour la gestion de l'ouverture des batteries.

### Objet de l'invention

L'objet de l'invention a pour but un procédé de traitement permettant de remédier aux inconvénients de l'art antérieur et permettant, plus particulièrement, d'offrir un cadre pour effectuer le recyclage de systèmes au lithium sans transfert de pollution avec une valorisation maximale qui assure une conversion de la ressource en composés à valeur ajoutée.

Selon l'invention, ce but est atteint par les revendications annexées. Plus particulièrement, ce but est atteint par le fait que le procédé comprend un broyage à sec à température ambiante sous atmosphère inerte, un traitement par au moins séparation magnétique et table densimétrique suivi d'une hydrolyse aqueuse, en vue de récupérer au moins le lithium sous forme de carbonate ou de lithiophosphate, un anion dudit sel de l'électrolyte et un concentré à base d'au moins un métal de ladite cathode.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels:
La figure 1 représente le spectre de diffraction par rayons X du lithiophosphate hydraté avec une demie molécule d'eau obtenu lors d'un mode particulier de réalisation d'un procédé de traitement selon l'invention.
La figure 2 représente le spectre de diffraction par rayons X de la fraction fine obtenue lors d'un mode particulier de réalisation d'un procédé de traitement selon l'invention.
Les figures 3 et 4 représentent schématiquement les différentes étapes d'un procédé de traitement selon l'invention d'une pile et/ou d'une batterie comprenant une anode à base de lithium.
Les figures 5 et 6 représentent les spectres RMN en utilisant un balayage à 188 MHz pour le fluor 19 et à 81 MHz pour le phosphore 31 d'une phase contenant l'ion PF₆ et obtenue lors d'un mode particulier de réalisation d'un procédé de traitement selon l'invention.

### Description de modes particuliers de réalisation

Pour pallier les différents inconvénients évoqués précédemment, la présente invention concerne un procédé de traitement de tous les systèmes au lithium traités séparément ou en mélange. Pour procéder au recyclage valorisant des batteries, il est important de procéder à l'ouverture du système par broyage des batteries pour accéder aux fractions valorisables. Cependant, beaucoup de batteries à recycler ont encore une charge importante et leur broyage produit des étincelles et des inflammations importantes voire des explosions notamment avec les systèmes au SO₂ ou SOCl₂. Pour éviter ces deux inconvénients, deux solutions complémentaires sont mises en oeuvre dans la présente invention.

La mise en sécurité du broyage est réalisée au moyen de gaz inertes d'une manière très économique en plaçant le système de broyage dans une enceinte à atmosphère et pression contrôlée et en utilisant des systèmes de broyage appropriés.

Dans une première mise en oeuvre de l'invention, l'opération de broyage est préalablement réalisée par un déchiquetage au moyen d'une cisaille rotative à faible vitesse de rotation et de préférence inférieure à 11 tours par minute (tr/min). Cette étape est destinée à libérer les contraintes internes des batteries. Dans une seconde étape, la charge déchiquetée est broyée dans un système à rotor tournant à une vitesse moyenne de préférence inférieure à 90 tr/min.

Dans une seconde mise en oeuvre de la présente invention, les deux systèmes de broyage sont mis dans une enceinte étanche inertisée au moyen d'un gaz qui est soit l'argon, soit le dioxyde de carbone, soit un mélange approprié des deux gaz. L'examen des densités des gaz montre que l'argon et le dioxyde de carbone vont réaliser une bonne protection au-dessus de la charge broyée.

| **Gaz** | **Densité** |
|---|---|
| Azote | 1.229 |
| Oxygène | 1.404 |
| Argon | 1.743 |
| Dioxyde de carbone | 1.931 |

Ces deux gaz vont chasser l'oxygène et l'azote et réaliser un ciel gazeux au-dessus des lames du broyeur et au-dessus des piles broyées. En outre, la présence de dioxyde de carbone va conduire à initier une passivation du lithium métallique par formation de carbonate de lithium en surface, ce qui ralenti la réactivité de ce métal.

Dans le cas du mélange de ces deux gaz, la proportion varie de 10 % à 90 % en argon et de 90 % à 10 % en dioxyde de carbone, mais, avantageusement, la proportion d'argon dans le mélange est comprise entre 10 % et 35 %.

L'injection de gaz est contrôlée par la teneur résiduelle en oxygène et par la pression interne. Ces deux paramètres sont avantageusement fixés à :
1- une teneur en oxygène comprise entre 100 et 10000 ppm mais de préférence voisine de 5000 ppm,
2- une pression différentielle comprise entre 30 et 130 millibars mais de préférence voisine de 80 millibars.

L'injection de gaz inerte ne se fait, de préférence, que si l'un des deux paramètres dépasse les valeurs de consigne ce qui permet de réduire considérablement les consommations.

La charge broyée est, alors, dirigée vers un tamis vibrant de maille inférieure ou égale à 3 mm et muni d'un séparateur magnétique à haute induction en bout de sortie et d'une table densimétrique. Cette opération permet en une seule passe d'obtenir 4 fractions :
1- la fraction fine passante qui est riche en oxydes métalliques et carbone,
2- la fraction magnétique qui se compose d'acier inoxydable des enveloppes des piles et batteries,
3- la fraction non magnétique dense qui se compose de métaux non ferreux et
4- la fraction non magnétique peu dense qui se compose d'un mélange de papier et de plastique.

Seule la charge fine passante, obtenue en 1 et qui se compose d'oxydes métalliques et de carbone, doit subir un traitement ultérieur. Ce traitement débute par un tamisage à 500 micromètres qui permet d'avoir une fraction passante riche en cobalt et pauvre en cuivre (<0.3%). Cette charge peut, alors, être une matière entrante dans tout procédé de valorisation des oxydes métalliques notamment à base de cobalt, de nickel et de manganèse ou un mélange quelconque des trois métaux.

Dans un mode particulier de mise en oeuvre de la présente invention, la charge fine passante au tamisage est mise en suspension dans l'eau sous une agitation vigoureuse. Cette turbulence dans le bain permet de libérer les oxydes métalliques et de lithium. La mise en solution de la lithine va alcaliniser la solution jusqu'à un pH supérieur à 12.

L'hydrolyse de la charge broyée conduit à la formation d'hydrogène. Cependant, la gestion de la vitesse d'addition des charges dans le réacteur de lessivage ainsi que la création d'une très forte turbulence au-dessus du bain permet d'éviter les risques d'inflammation de l'hydrogène et d'explosion. Cette opération est associée à un appauvrissement de l'atmosphère en oxygène au-dessus du bain. Cet air provient de l'aspiration de l'enceinte du broyeur et permet de maintenir une atmosphère pauvre en oxygène de manière à être en permanence à une concentration inférieure à 0.5 % en volume qui se situe dans la plage de sécurité de l'hydrogène. En fin de réaction d'hydrolyse et après filtration, on obtient une solution alcaline de sels de lithium et une suspension d'oxydes métalliques et de carbone.

La solution est ensuite traitée de manière à séparer le lithium dissous alors que la charge insoluble est traitée pour récupérer les métaux cathodiques. La récupération du lithium dissous se fait à partir d'une solution de pH voisin de 12. Une acidification au moyen d'un réactif approprié permet de précipiter le sel de lithium.

Dans un mode d'application particulier de la présente invention, le lithium est précipité sous forme de carbonate, et les gaz issus de la sortie du broyeur sont utilisés comme apport de dioxyde de carbone comme réactif de précipitation. Cette mise en oeuvre particulière de l'invention est applicable avantageusement dans le cas du recyclage de mélange de piles et de batteries incluant les systèmes au chlorure de thionyl. Cet avantage est obtenu grâce à la solubilité différente des trois gaz dans l'eau à température et pression ambiante.

| **Gaz** | **Solubilité à 20°C g/100g d'eau** |
|---|---|
| SO₂ | 11.9 |
| HCl | 20 |
| Dioxyde de carbone | 0.168 |

La précipitation se fait par ajustement du pH de sa valeur initiale voisine de 13 à une valeur de 9. Le produit précipité est lavé par une eau saturée en dioxyde de carbone puis séché à 105°C. En raison de la solubilité du Li₂CO₃, la concentration résiduelle en lithium reste élevée, de l'ordre de 1,8 g/l et nécessite un traitement ultérieur.

Dans un autre mode d'application, la solution de lessivage ayant un pH de 12,1 et contenant 11 g/l de lithium est neutralisée au moyen d'acide phosphorique à 85 % jusqu'à un pH inférieur à 8.5. La solution est alors réalcalinisée jusqu'à un pH supérieur à 12. Le précipité formé est, alors, séparé par filtration. La concentration en lithium résiduel est de 89 mg/l ce qui conduit à un taux d'extraction supérieur à 99,15 %. Cette concentration résiduelle en lithium est une concentration limite car elle correspond à la solubilité de Li₃PO₄ qui est de 400 mg/l (Hand Book of Chemistry and Physics, D.L. Lide éditeur, 75th édition, 1993, monographie de chimie et de physique).

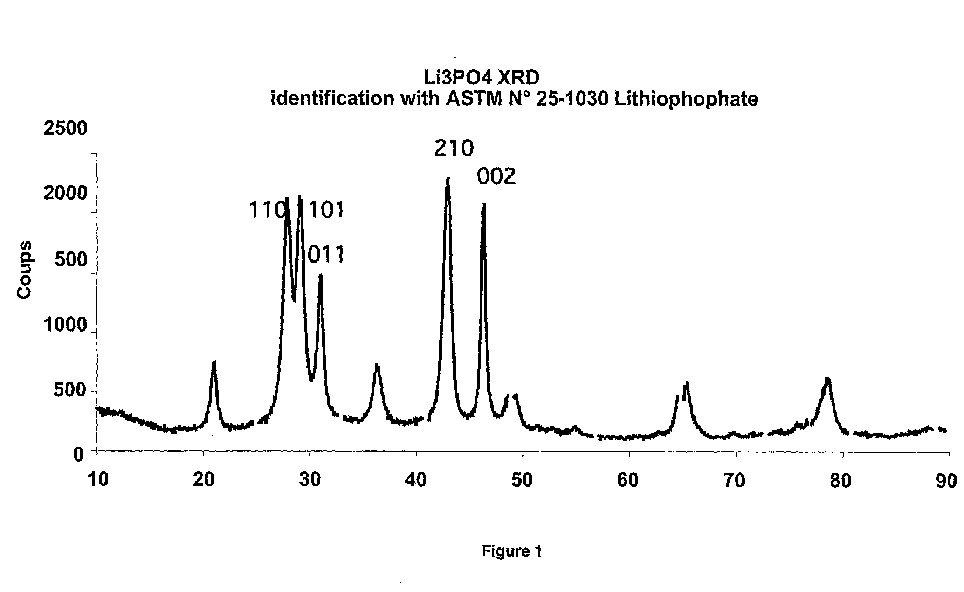

Le solide précipité est séché puis analysé par diffraction X et par analyse chimique. La teneur en Li₃PO₄ est de 93 % et l'analyse par diffraction X montre que le produit est un lithiophosphate hydraté avec une 1/2 molécule d'eau et donc avec une teneur en eau de 7 %. Cela confirme bien la pureté du produit obtenu comme le montre le spectre de diffraction X repris sur la figure 1.

La charge lessivée est traitée différemment selon sa composition. Comme les piles au chlorure de thionyl ont très peu d'influence sur l'apport de matériaux cathodiques, les différentes charges vont se distinguer selon le rapport manganèse/cobalt.

Trois cas se rencontre durant le traitement des piles et batteries au lithium en mélange.

| | Mélange de piles et batteries | Concentration relative des matériaux cathodiques | |
|---|---|---|---|
| | | Manganèse | Cobalt |
| CAS N°1 | Lithium primaire mélangé avec une faible proportion de Lithium ion | Elevé>95 % | Bas <5 % |
| CAS N°2 | Lithium primaire mélangé avec du Lithium ion | Entre 40 et 60 % | Entre 60 et 40 % |
| CAS N°3 | Lithium ion seul | Bas <2 % | Elevé>98 % |

Dans le cas N°1, étant donné sa composition en manganèse, la charge fine composée d'oxydes et de carbone est utilisable dans tous les procédés décrits dans l'état de la technique, et notamment dans les deux procédés décrits respectivement dans les demandes de brevets FR-A-2704098 et EP-A-0620607 et dans les demandes de brevets FR-A-2827710 et WO-A-03021708.

Dans le cas N° 2 la charge est dissoute en milieu sulfurique 2N à 80°C en présence de grenaille d'acier dans un rapport Fer/masse cathodique de 0.15. La pulpe obtenue est refroidie jusqu'à 60°C puis filtrée. La partie solide renferme le carbone alors que la solution, qui est à pH inférieur à 3, contient du sulfate de zinc et de manganèse ainsi que d'autres impuretés métalliques et notamment du cuivre. Le cuivre est cémenté au moyen de grenaille d'acier: Après cémentation, on obtient du cuivre métallique divisé et une solution de pH compris entre 2 et 2,85. Ce pH est ramené à une valeur de 3,85 au moyen de soude à 20 %. Cette modification de pH conduit à la précipitation du fer sous forme d'hydroxydes. Cette solution purifiée est alors neutralisée à pH 5,8 puis soumise à une électrolyse pour obtenir du cobalt métallique selon une configuration traditionnelle d'électrolyse à un compartiment. En particulier, on pourra avantageusement utiliser un traitement précédent de la Demanderesse sur des solutions de sulfate de zinc et de manganèse comme décrit dans les demandes de brevet FR-A-2827710 et WO-A-03021708.

Dans le cas de la présente invention, l'électrolyse est effectuée à une température de 55°C sous une densité de courant comprise entre 400 et 600A/m² en utilisant une cathode en acier inoxydable et une anode en plomb antimonié. Le manganèse précipite sous forme d'oxyhydroxyde et sous forme de dioxyde. Après filtration et lavage, il est orienté vers les voies de valorisation connues dans l'état de la technique et notamment celles évoquées pour le cas N°1. La solution, qui s'appauvrit en cobalt et manganèse, s'enrichit en acide qui est réutilisé en tête de procédé.

Dans le cas N°3, la charge est mise en solution puis purifiée de la même manière que pour le cas N°2. La solution issue de la purification est alors oxydée à pH compris entre 2,3 et 2,8 au moyen d'hypochlorite de sodium pour précipiter l'hydroxyde de cobalt (III).

A la fin du traitement des cas 2 et 3, la solution contient une partie de sels de lithium issus de la réduction de la cobaltite ou inséré dans le MnO₂ des éléments primaires. Cette solution est neutralisée au moyen de soude à pH 8,5 pour récupérer tous les métaux restant encore en solution puis orientée vers le traitement des eaux de lessivage où elle subit le même traitement pour récupérer le lithium sous forme lithiophosphate.

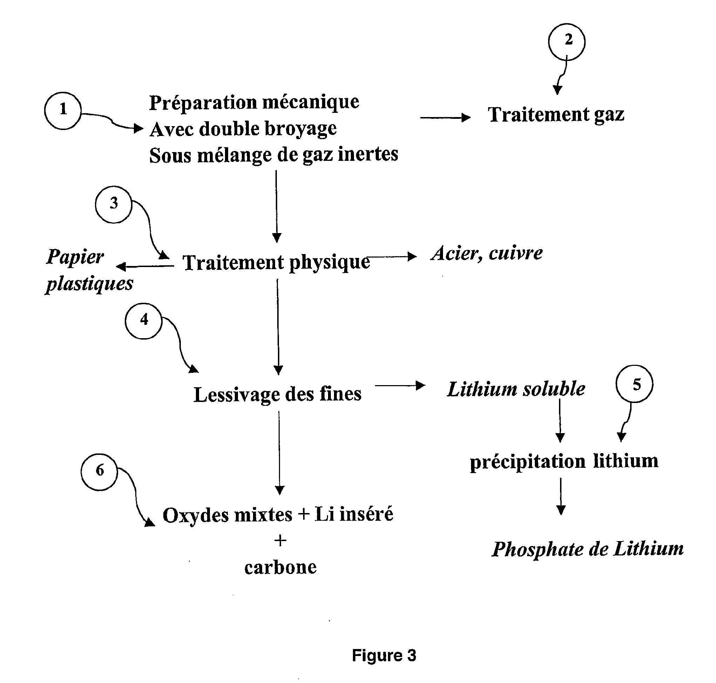

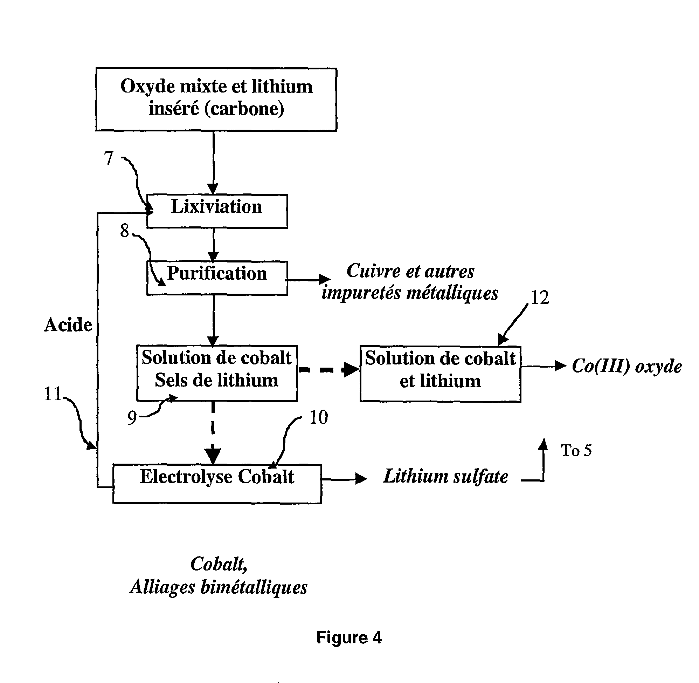

Le mode de mise en oeuvre industrielle dans un procédé continu a été conçu sur la base d'essais pilotes à une taille de 10 kg /heure attestant du caractère opérationnel et industrialisable de l'invention ainsi que repris sur les figures 3 et 4.

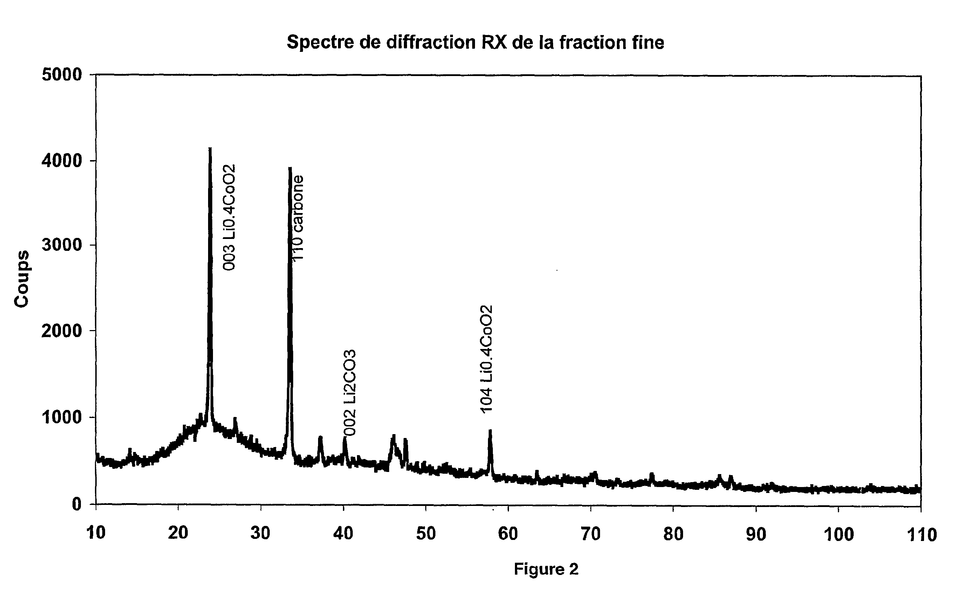

Le descriptif suivant reprend un mode d'application de la présente invention aux batteries lithium -ion sans que cela ait un caractère exhaustif. Le traitement mécanique 1 est effectué dans une enceinte étanche où sont disposés deux broyeurs en série. Après balayage de l'enceinte au moyen d'un gaz composé de 20 % d'argon et de 80 % de dioxyde de carbone, 10 kg de piles et batteries en mélange sont introduits en continu à travers un double sas. Les gaz issus de 1 sont traités en 2 par lavage à l'eau et neutralisation au moyen de soude. Le broyat est extrait au moyen d'une vis sans fin via un double sas. Il subit alors le traitement physique 3 au moyen d'une séparation magnétique haute induction et d'une table densimétrique. A l'issue de ce traitement, la charge fine et dense se compose de cobaltite de lithium, de carbone et de carbonate de lithium comme le montre le spectre de diffraction aux rayons X reportés sur la figure 2. Elle est traitée par lessivage à l'eau en 4 pour récupérer le lithium soluble. Après séparation solide/liquide, la solution est envoyée vers la récupération du lithium par précipitation en 5 alors que la fraction solide de cobaltite 6 est valorisable en métallurgie dans les filières où il y a besoin d'ajout de cobalt. Les caractéristiques sont :

| **Paramètres** | **Valeur** |
|---|---|
| Cobalt total | 34.56 % |
| Lithium | 3.2 % |
| Fer | 0.15 % |
| Cuivre | 0.87 % |
| Carbone | 8.1 % |

Afin d'illustrer la faisabilité de l'ensemble du procédé issu de la présente invention, la fraction solide 6 issue du traitement 5 est envoyée en lixiviation acide 7. Après dissolution de la cobaltite de lithium, la solution est filtrée pour séparer le carbone puis purifiée des métaux autres que le cobalt en 8. La solution de sulfate de cobalt et de lithium 9 est alors séparée en deux fractions. Une première fraction est soumise à une électrolyse 10. Au terme de cette électrolyse, on obtient des cathodes de cobalt et une solution appauvrie en sulfate de cobalt et enrichie en acide sulfurique 11 qui est renvoyée en tête de lixiviation. La seconde est oxydée au moyen d'hypochlorite de sodium en 12 pour obtenir un hydroxyde de cobalt trivalent. La solution ne contient alors plus de sulfate de lithium qui est envoyé en 5 pour la précipitation du phosphate de lithium.

Dans cette mise en oeuvre, la valorisation de la cobaltite de lithium est bien prouvée selon trois filières différentes (cobaltite en l'état, cathode de cobalt et hydroxyde de cobalt trivalent). Les trois filières étant illustrées quant à leur faisabilité industrielle, le choix dépendra de la capacité de l'installation et de la proximité des filières de valorisation.

### Extension à la récupération de l'anion PF6 :

Il est communément reconnu que le sel LiPF6 se décompose dans l'eau selon :

LiFP₆ +H2O→ LiF + HF + POF₃

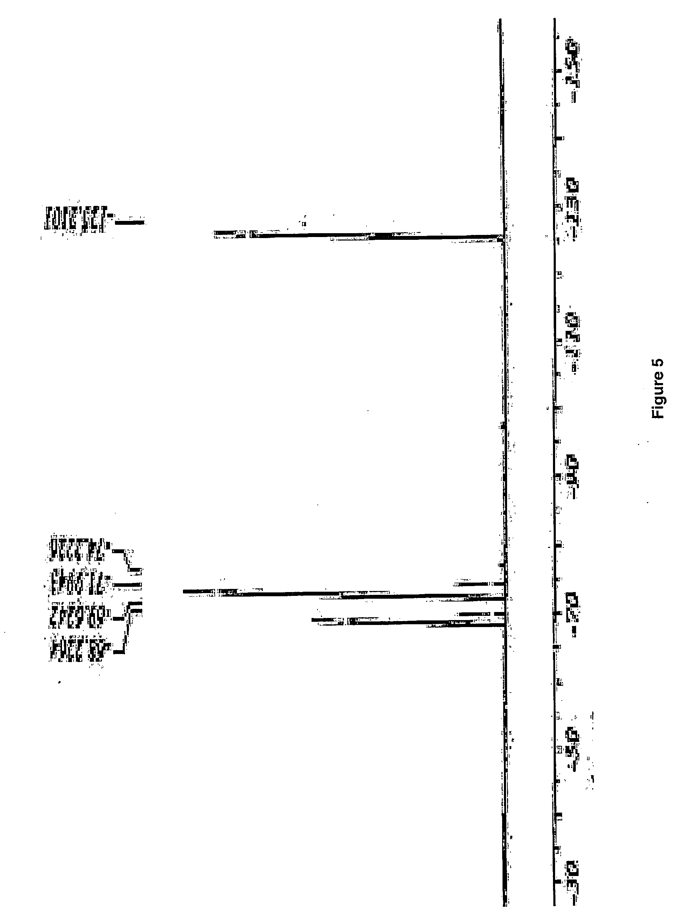

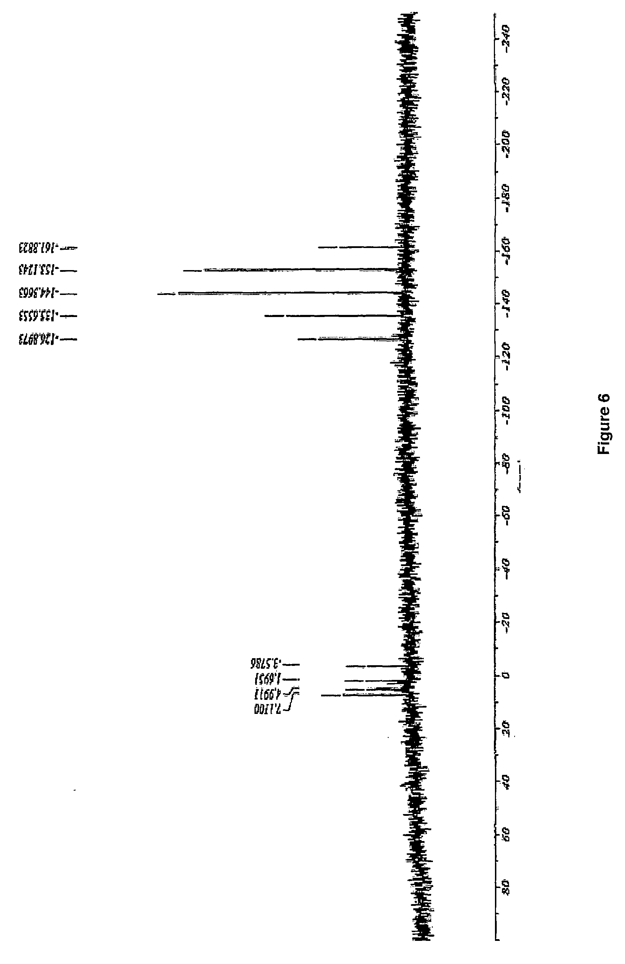

Cela se traduit par la disparition de l'anion PF₆ et un dégagement de gaz au-dessus de la solution aqueuse. Durant nos expérimentations, nous avons constaté que lors de traitement des piles en mélange à base de Li-SOCl₂ et Li-MnO₂ ou Li-lons, aucun dégagement n'a eu lieu. Cela confirme la stabilité de LiPF₆ en solution aqueuse dans nos conditions. Nous avons alors cherché à confirmer la présence de l'anion PF₆ par analyse. Les solutions d'hydrolyse récupérées en 4 (figure 3) ont été analysées par Résonance Magnétique Nucléaire (RMN) en utilisant un balayage à 188.3 MHz pour le fluor 19 et à 81 MHz pour le phosphore 31. On sait que le phosphore résonne sous la forme d'un heptet et le fluor sous la forme d'un doublet. Les valeurs de constantes et les déplacements chimiques de 19F et 31 P (figures 5 et 6) permettent d'identifier sans ambiguïté l'ion PF₆ en solution aqueuse. Nous en avons alors déduit que l'un des composants apportés par les piles au chlorure jouait le rôle stabilisateur de l'anion PF₆. Ces composants sont SO₃, HCl, LiCl et AlCl₃. Nos essais complémentaires d'étude de la stabilité de LiPF6 en présence de ces composants ont montré que LiCl joue le rôle de stabilisant de LiPF6 en solution aqueuse.

Comme l'anion PF₆ est stable dans nos solutions aqueuses, nous avons recherché les voies possibles de sa récupération. L'état de l'art n'a pas montré de voie connue pour la précipitation de l'ion PF₆ dans des effluents aqueux. L'étude de la solubilité des divers sels de PF₆ nous a orienté vers la recherche de cation permettant de précipiter quantitativement l'ion héxofluorophosphate. Cette précipitation a été conduite en milieu aqueux à partir de nos solutions stabilisées. Nous nous sommes orientés vers les cations plus gros que le cation lithium. Comme les solutions sont stabilisées par l'anion chlorure, nous avons essayé les chlorures de cations alcalins ainsi que l'ammonium. Les solubilités obtenues sont :

| **Cation** | **Solubilité M/l de PF₆** |
|---|---|
| Na+ | 5.59 |
| K+ | 0.43 |
| NH4+ | 0.11 |
| Rb+ | 0.076 |
| Cs+ | 0.03 |

Il est apparu que la solubilité dépend, entre autres, de la taille du cation comme le montre le tableau suivant qui reprend la solubilité en fonction du rayon ionique :

| **Cation** | **Solubilité M/l de PF6-** | **Rayon ionique (A°)** |
|---|---|---|
| Na+ | 5.59 | 0.98 |
| K+ | 0.43 | 1.33 |
| NH₄+ | 0.11 | 1.43 |
| Rb+ | 0.076 | 1.49 |
| Cs+ | 0.03 | 1.65 |

Les solubilités les plus basses sont atteintes avec des cations très onéreux comme le Cs et le Rb, incompatibles avec une application industrielle. La solubilité atteinte avec l'ion ammonium (0,43 M/L, soit 3,3 g/l) reste insuffisante pour une récupération quantitative. Il nous a donc fallu nous orienter vers la recherche de cations plus gros. Comme la solubilité obtenue avec l'ion ammonium est quand même assez faible, nous avons alors utilisé des sels d'ammonium quaternaire du type R₄N⁺(avec R= méthyl, éthyl et buthyl). Ces produits sont largement utilisés, notamment de manière industrielle et, en particulier, comme surfactants cationiques dans l'industrie des détergents. Les solubilités obtenues sont toutes plus basses que celles obtenues avec l'ion ammonium mais restent supérieures à 8×10⁻³ M/l (soit1,2 g/l). Nous avons alors exploré d'autres cations plus gros et en particulier ceux réputés pour donner des solubilités relativement basses avec l'ion perchlorate dont la configuration est voisine de celle de l'hexafluorophosphate. Des résultats supérieurs aux précédents ont été obtenus avec deux cations qui sont :
- le complexe hexamine du nickel : [*Ni(NH*₃)₆]²⁺
- et le dihydro-1,4-diphenyl-3,5-phenylimino-1,2,4-triazole (Merck Index N° 12, 6711) :

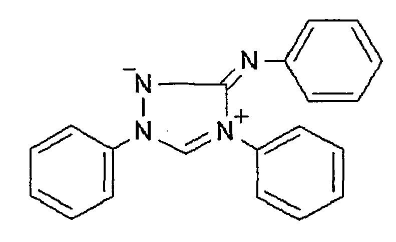

Les solubilités obtenues à température ambiante sont, pour le complexe du nickel hexamine, de s< 200 mg/l et, pour le Dihydro-1,4-diphenyl-3,5-phenylimino-1,2,4-triazole, de s< 20 mg/l.

### Extension à la récupération de nouveaux matériaux cathodiques à base de phosphate de fer lithié.

Les cathodes des batteries lithium-ion actuellement commercialisées sont à base de cobaltite de lithium. Par contre, le coût et la toxicité du cobalt d'une part et les problèmes de sécurité pouvant résulter de l'utilisation de cobaltite ont conduit à un effort de recherche important pour la mise au point de nouveaux matériaux cathodiques. Selon l'état de l'art, le matériau le plus prometteur semble être le phosphate de fer lithié (LiFePO₄). Nous avons synthétisé le phosphate de fer lithié selon A. Yamda et al. Journal of Electrochemical Society, volume 148 N°3 pA224 (2001). Ensuite, nous avons procédé au traitement de ce composé comme une masse cathodique 6 issue du traitement physico-chimique tel que décrit sur la figure 3.

Le matériau est mis en solution en milieu sulfurique 2N à 80°C en présence de grenaille d'acier dans un rapport Fer/masse cathodique de 0.15. La solution obtenue est refroidie à 60°C puis oxydée au moyen d'eau oxygénée 30% en volume à pH 3,85. Le fer est alors séparé sous forme d'oxyhydroxyde du type ghoetite. La solution de lithium est alors traitée selon le mode décrit en 5 sur la figure 3/5. Par ce mode de mise en oeuvre, le fer, le lithium et le phosphate du matériau cathodique sont tous récupérés. Par ce mode de mise en oeuvre, le procédé reste applicable lors de l'évolution de la composition des batteries au lithium avec un changement de la composition cathodique.

## Revendications

1. Procédé de traitement hydrométallurgique des piles et des batteries comprenant au moins une anode à base de lithium, un sel dissous dans un électrolyte et une cathode comprenant au moins un métal ou une combinaison de métaux choisis parmi le cobalt, le nickel, le manganèse et le fer, en vue de récupérer les fractions valorisables, procédé **caractérisé en ce qu'**il comprend un broyage à sec à température ambiante sous atmosphère inerte, un traitement par au moins séparation magnétique et table densimétrique suivi d'une hydrolyse aqueuse, en vue de récupérer au moins le lithium sous forme de carbonate ou de lithiophosphate, un anion dudit sel de l'électrolyte et un concentré à base d'au moins un métal de ladite cathode.

2. Procédé selon la revendication 1, **caractérisé en ce que** le broyage est effectué sous une atmosphère constituée d'un gaz choisi parmi l'argon et le dioxyde de carbone ou d'un mélange d'argon et de dioxyde de carbone dans des proportions respectives de 10 % à 90 % en argon et de 90% à 10% en dioxyde de carbone.

3. Procédé selon la revendication 2, **caractérisé en ce que** la proportion en argon dans le mélange d'argon et de dioxyde de carbone est de 10 % à 35 %.

4. Procédé selon l'une quelconque des revendications 1 à 3, **caractérisé en ce que** le broyage est effectué au moyen de deux broyeurs successifs dont le premier tourne à une vitesse maximale de 11 tr/min et le second à une vitesse inférieure à 90 tr/min.

5. Procédé selon la revendication 4, **caractérisé en ce que** le premier broyeur est un broyeur à cisaille rotative tandis que le second broyeur est un broyeur à rotor.

6. Procédé selon l'une quelconque des revendications 1 à 5, **caractérisé en ce que** le broyat résultant de l'opération de broyage est traité par un dispositif qui combine un criblage à 3 mm suivi d'un criblage à 500 micromètres, une séparation magnétique à haute induction et une table densimétrique et un tamisage en vue de séparer, du broyat et en une seule passe, une fraction magnétique, une fraction non magnétique dense, une fraction magnétique peu dense et une fraction fine au moins riche en oxydes métalliques.

7. Procédé selon la revendication 6, **caractérisé en ce que** la fraction fine, passante au criblage, est traitée par lessivage à l'eau en vue de récupérer du lithium soluble sous forme de lithiophosphate.

8. Procédé selon la revendication 7, **caractérisé en ce que** la précipitation du lithiophosphate est obtenue par double modification du pH au moyen de soude et d'acide phosphorique.

9. Procédé selon l'une des revendications 7 et 8, **caractérisé en ce que** la fraction fine débarrassée du lithium soluble et comportant au moins la cathode composée d'au moins un métal ou d'une combinaison de métaux, est dissoute en milieu sulfurique 2N à une température de 80°C en présence de grenaille d'acier dans un rapport entre le fer et la fraction fine débarrassée du lithium soluble de 0,15.

10. Procédé selon la revendication 9, **caractérisé en ce que** la solution issue de l'attaque acide de ladite cathode et après purification par précipitation sélective des impuretés métalliques est soumise à une électrolyse à une température de 55°C sous une densité de courant comprise entre 400 et 600A/m² en utilisant deux électrodes en acier inoxydable et en plomb antimonié.

11. Procédé selon la revendication 9, **caractérisé en ce que** la solution riche en cobalt dans le cas d'une attaque de cathode à base de cobalt, est traitée au moyen d'hypochlorite après régulation du pH à une valeur comprise entre 2.3 et 2.8 pour obtenir un hydroxyde de cobalt trivalent.

12. Procédé selon les revendications 1 à 11, **caractérisé en ce que** l'anion du sel de l'électrolyte étant l'hexafluorophosphate PF₆, ledit anion est stabilisé en solution aqueuse au moyen de LiCl.

13. Procédé selon la revendication 12, **caractérisé en ce que** l'anion hexafluorophosphate PF₆ est récupéré par précipitation au moyen de sels d'ammonium simple, d'ammonium quaternaire, de complexe de nickel ammoniac ou de Dihydro-1,4-diphenyl-3,5-phenylimino-1,2,4-triazol.

14. Procédé selon les revendications 1 à 9, **caractérisé en ce que** la cathode étant à base de LiFeP04, elle est traitée au moyen d'acide sulfurique 2N à 80°C puis d'eau oxygénée à 30% en volume et à 60°C, en vue de séparer le fer du lithium et du phosphate.

## Claims

1. Method for hydrometallurgical treatment of cells and batteries comprising at least a lithium-based anode, a salt dissolved in an electrolyte and a cathode comprising at least a metal or a combination of metals selected from cobalt, nickel, manganese and iron, for recovering the recoverable fractions, method **characterized in that** it comprises dry crushing at room temperature in an inert atmosphere, treatment by at least magnetic separation and densimetric table followed by aqueous hydrolysis, for the purposes of recovering at least the lithium in the form of carbonate or lithiophosphate, an anion of said electrolyte salt and a concentrate comprising at least one metal of said cathode.

2. Method according to claim 1, **characterized in that** crushing is performed in an atmosphere formed by a gas selected from argon and carbon dioxide or a mixture of argon and carbon dioxide in respective proportions of 10 % to 90 % of argon and 90% to 10% of carbon dioxide.

3. Method according to claim 2, **characterized in that** the proportion of argon in the argon and carbon dioxide mixture is from 10 % to 35 %.

4. Method according to any one of the claims 1 to 3, **characterized in that** crushing is performed by means of two successive mills the first of which operates at a maximum speed of 11 rpm and the second of which operates at a speed of less than 90 rpm.

5. Method according to claim 4, **characterized in that** the first mill is a rotary shearing mill whereas the second mill is an impact mill.

6. Method according to any one of the claims 1 to 5, **characterized in that** the homogenate resulting from the crushing operation is treated by a device that combines sieving to 3 mm followed by sieving to 500 micrometers, high-induction magnetic separation and a densimetric table and screening in order to separate from the homogenate in a single run, a magnetic fraction, a dense non-magnetic fraction, a magnetic fraction with a low density and a fine fraction at least rich in metal oxides..

7. Method according to claim 6, **characterized in that** the fine fraction, formed the sieving undersized, is treated by leaching with water to recover soluble lithium in the form of lithiophosphate.

8. Method according to claim 7, **characterized in that** precipitation of the lithiophosphate is obtained by double modification of the pH by means of soda and phosphoric acid.

9. Method according to one of the claims 7 and 8, **characterized in that** the fine fraction, from which the soluble lithium has been removed and comprising at least the cathode composed of at least a metal or a combination of metals, is dissolved in a 2N sulphuric medium at a temperature of 80°C in the presence of steel shot in a ratio between the iron and the fine fraction from which the soluble lithium has been removed of 0.15.

10. Method according to claim 9, **characterized in that** the solution resulting from acid attack of said cathode and after purification by selective precipitation of the metallic impurities is subjected to electrolysis at a temperature of 55°C under a current density comprised between 400 and 600A/m² using two electrodes made of stainless steel and antimony-lead alloy.

11. Method according to claim 9, **characterized in that** the cobalt-rich solution in the case of a cobalt-based cathode attack is treated using hypochlorite after the pH has been regulated to a value comprised between 2.3 and 2.8 to obtain a trivalent cobalt hydroxide.

12. Method according to claims 1 to 11, **characterized in that** the anion of the electrolyte salt being hexafluorophosphate PF₆, said anion is stabilized in an aqueous solution by means of LiCl.

13. Method according to claim 12, **characterized in that** the hexafluorophosphate PF₆ anion is recovered by precipitation by means of simple ammonium salts, quaternary ammonium, ammoniac nickel complex or Dihydro-1,4-diphenyl-3,5-phenylimino-1,2,4-triazol.

14. Method according to claims 1 to 9, **characterized in that** the cathode being LiFePO4-based, it is treated by means of 2N sulphuric acid at 80°C and then with 30% volume hydrogenated peroxide at 60°C to separate the iron from the lithium and phosphate.

## Patentansprüche

1. Verfahren zur hydrometallurgischen Behandlung von Zellen und Batterien, das mindestens eine Anode auf Lithiumbasis, ein in einem Elektrolyten gelöstes Salz und eine Kathode aufweist, die mindestens ein Metall oder eine Verbindung aus Metallen umfasst, die aus Kobalt, Nickel, Mangan und Eisen ausgewählt sind, um die wiederverwertbaren Fraktionen rückzugewinnen, Verfahren, das **dadurch gekennzeichnet ist, dass** es eine Trockenzerkieinerung bei Umgebungstemperatur unter inerter Atmosphäre, eine Behandlung durch mindestens Magnettrennung und Tischausleser umfasst, gefolgt von einer wässrigen Hydrolyse, um zumindest das Lithium in Form von Karbonat oder Lithiumphosphat, ein Anion des genannten Salzes des Elektrolyten und ein Konzentrat auf Basis mindestens eines Metalls der genannten Kathode rückzugewinnen.

2. Verfahren nach Anspruch 1, **dadurch gekennzeichnet, dass** die Zerkleinerung unter einer Atmosphäre erfolgt, die aus einem Gas besteht, das aus Argon und Kohlenstoffdioxid oder einem Gemisch aus Argon und Kohlenstoffdioxid in einem jeweiligen Verhältnis von 10 zu 90 % Argon und 90 zu 10% Kohlenstoffdioxid ausgewählt ist.

3. Verfahren nach Anspruch 2, **dadurch gekennzeichnet, dass** das Verhältnis von Argon in dem Gemisch aus Argon und Kohlenstoffdioxid 10 zu 35 % beträgt.

4. Verfahren nach einem der Ansprüche 1 bis 3, **dadurch gekennzeichnet, dass** die Zerkleinerung mittels zweier aufeinanderfolgender Zerkleinerer erfolgt, von denen der erste eine Umdrehungsgeschwindigkeit von maximal 11 U/min und der zweite eine Umdrehungsgeschwindigkeit unter 90 U/min hat.

5. Verfahren nach Anspruch 4, **dadurch gekennzeichnet, dass** der erste Zerkleinerer ein Drehscherenzerkleinerer ist, während der zweite Zerkleinerer ein Rotorzerkleinerer ist.

6. Verfahren nach einem der Ansprüche 1 bis 5, **dadurch gekennzeichnet, dass** das beim Zerkleinern entstandene Zerkleinerungsgut mit einer kombinierten Vorrichtung behandelt wird, die eine 3 mm-Klassierung und dann eine 500 Mikrometer-Klassierung, eine Hochinduktions-Magnettrennung und einen Tischausleser und eine Siebung im Hinblick auf die Trennung einer Magnetfraktion, einer nichtmagnetischen, dichten Fraktion, einer wenig dichten magnetischen Fraktion und einer Feinfraktion, die zumindest reich an Metalloxiden ist, aus dem Zerkleinerungsgut und in einem Durchgang umfasst.

7. Verfahren nach Anspruch 6, **dadurch gekennzeichnet, dass** die Feinfraktion aus der Siebung durch Auswaschen mit Wasser im Hinblick auf die Rückgewinnung des löslichen Lithiums in Form von Lithiumphosphat behandelt wird.

8. Verfahren nach Anspruch 7, **dadurch gekennzeichnet, dass** die Ausfällung des Lithiumphosphats durch zweifache Änderung des pH-Werts mittels Natriumkarbonat und Phosphorsäure erreicht wird.

9. Verfahren nach einem der Ansprüche 7 und 8, **dadurch gekennzeichnet, dass** die von löslichem Lithium befreite Freinfraktion, die mindestens die Kathode enthält, die aus mindestens einem Metall oder einer Verbindung aus Metallen besteht, in 2N schwefligem Milieu bei einer Temperatur von 80°C in Gegenwart von Stahlkies in einem Verhältnis Eisen zu von löslichem Lithium befreiter Feinfraktion von 0,15 gelöst wird.

10. Verfahren nach Anspruch 9, **dadurch gekennzeichnet, dass** die aus dem Säureätzen der Kathode und nach Klärung durch selektives Ausfällen der Metallverunreinigungen entstandene Lösung bei einer Temperatur von 55°C unter einer Stromdichte von 400 bis 600 A/m² einer Elektrolyse unterzogen wird, wobei zwei Elektroden aus Inoxstahl und Antimonblei verwendet werden.

11. Verfahren nach Anspruch 9, **dadurch gekennzeichnet, dass** die kobaltreiche Lösung im Falle eines Kathodenätzens auf Kobaltbasis mittels Hypochlorit nach Regelung des pH-Werts auf einen Wert von 2,3 bis 2,8 behandelt wird, damit man ein trivalentes Kobalthydroxid erhält.

12. Verfahren nach Anspruch 1 bis 11, **dadurch gekennzeichnet, dass**, nachdem das Anion des Salzes des Elektrolyten Hexafluorphosphat PF₆ ist, das genannte Anion mittels LiCl in wässriger Lösung stabilisiert wird.

13. Verfahren nach Anspruch 12, **dadurch gekennzeichnet, dass** das Hexafluorphosphat PF₆-Anion durch Ausfällen mittels Salzen aus einfachem Ammonium, quaternärem Ammonium, einem Komplexes aus Nickel und Ammoniak oder aus Dihydro-1,4-diphenyl-3,5-phenylimino-1,2,4-Triazol aufgefangen wird.

14. Verfahren nach Anspruch 1 bis 9, **dadurch gekennzeichnet, dass**, nachdem die Kathode eine auf Basis von LiFePO4 ist, sie mittels 2N-Schwefelsäure auf 80°C und dann mittels 30 Vol.-%iges Wasserstoffperoxid und auf 60°C im Hinblick auf die Trennung des Eisens aus dem Lithium und Phosphat behandelt wird.
